# FASCICULE DE BREVET EUROPEEN

(11) **EP 1 493 555 B1**
(45) Date de publication et mention de la délivrance du brevet: **16.12.2009**
(21) Numéro de dépôt: 04291422.6
(22) Date de dépôt: 08.06.2004
(51) Int. Cl.: B32B 5/26, B32B 21/02, D04H 13/00

(54) **NONTISSÉ BIODÉGRADABLE**
BIOLOGISCH ABBAUBARER FASERVLIESSTOFF
BIODEGRADABLE NONWOVEN

(30) Priorité: 01.07.2003 FR 0307946
(43) Date de publication de la demande: 05.01.2005
(73) Titulaire: Rieter Perfojet (S.A.), 38330 Montbonnot (FR)
(72) Inventeur: Noelle, Frédéric, 38330 Saint Nazaire les Eymes (FR)
(74) Mandataire: Eidelsberg, Victor Albert

(56) Documents cités:
- EP-A- 0 589 222
- EP-A- 0 637 641
- US-A- 5 300 358
- US-A- 6 110 848
- US-A1- 2002 123 725

## Description

La présente invention est relative aux nontissés et, plus particulièrement aux nontissés biodégradables.

On connaît déjà un nontissé biodégradable en viscose ou en viscose fibres de bois. Ces nontissés n'ont pas une bonne résistance mécanique, ni non plus de résistance à l'abrasion en particulier à l'état humide. Ils se prêtent mal à l'application en tant que lingette, papier de toilette sec ou humide et autres applications de produits d'hygiène.

La présente invention pallie cet inconvénient par un nontissé biodégradable, qui a une résistance mécanique et une résistance à l'abrasion qui sont suffisantes aux usages mentionnés ci-dessus, mais qui toutefois est peu coûteux à fabriquer.

Le nontissé suivant l'invention comprend une couche d'âme en fibres de bois des deux côtés de laquelle sont appliquées des couches de recouvrement en une matière synthétique ou artificielle. Les couches de recouvrement sont constituées de filaments continus en acide polylactique (PLA) ou en alcool polyvinylique (PVA).

En raison de la nature des filaments continus en polyacide lactique ou en alcool polyvinylique, les couches de recouvrement sont biodégradables tout comme l'est par sa nature même l'âme en fibres de bois. Le composite ainsi obtenu est biodégradable bien plus que ne l'est un non tissé en viscose. Mais comme les couches de recouvrement sont constituées de filaments continus, cette continuité de la matière donne la résistance mécanique, notamment la résistance à la déchirure et la résistance à l'abrasion, à un point tel que l'on peut se contenter d'une petite teneur en acide polylactique ou en alcool polyvinylique, qui peut représenter notamment moins de 50 % du poids du nontissé et, de préférence, moins de 30 % de ce poids.

La couche d'âme est liée aux couches de recouvrement soit par calandrage, soit, de préférence, par un enchevêtrement par jets de fluide, soit par un calandrage puis par un enchevêtrement par de jets de fluide, soit par un enchevêtrement par jets de fluide suivi d'un calandrage..

Le nontissé peut éventuellement avoir des motifs en relief ou en creux obtenus par calandrage ou par enchevêtrement par jets d'eau.

Les couches de recouvrement sont, de préférence, des nappes spunbond. Le nontissé a une épaisseur comprise en général entre 0,30 et 1,5 mm et un poids au m² compris entre 25 g/m² et 100 g/m².

De préférence, les filaments ont un titre compris entre 0,5 et 3 décitex et mieux entre 0,8 et 2 décitex.

Les fibres de bois ont une longueur de 2 à 7 et de préférence de 3 à 5 mm.

Suivant un mode de réalisation préféré les filaments sont en alcool polyvinylique de qualité apte à se dissoudre dans l'eau à une température de plus de 70° C. On peut ainsi transformer le non tissé en un déchet liquide dont il est plus facile de se débarrasser que des déchets solides. Le nontissé est dispersable dans l'eau chaude, les fibres de bois, après que l'alcool polyvinylique qui les maintient à été dissout, se dispersant à leur tour dans l'eau. On peut mettre un conservateur dans l'emballage du nontissé, ou l'ajouter à une solution aqueuse d'imprégnation du nontissé La solution peut représenter de 50 à 800 % en poids du nontissé sec.

Le nontissé a notamment une épaisseur compris entre 0, 4 mm et 1 mm et une structure symétrique, la couche d'âme ayant par exemple une épaisseur comprise entre 0,25 et 0,7 mm.

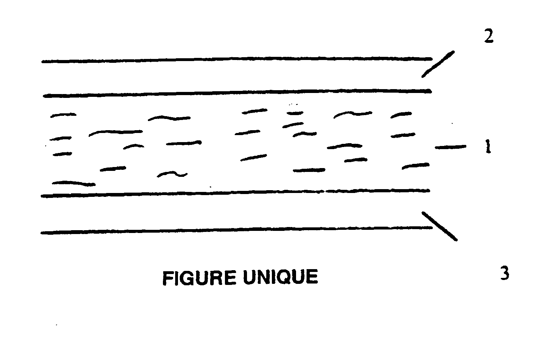

La figure unique du dessin annexé illustre l'invention.

Le nontissé représenté au dessin comprend une couche 1 d'âme en fibres de bois des deux côtés de laquelle sont liées par enchevêtrement par jets d'eau des couches 2, 3, de recouvrement en alcool polyvinylique. Les couches 2, 3 de recouvrement représentent à elles deux 30 % en poids du non tissé. Les couches de recouvrement sont en filaments continus d'alcool polyvinylique d'un titre de deux décitex. Ce nontissé peut être imprégné d'une solution notamment aqueuse, auquel cas on ajoute dans la solution un conservateur en une quantité suffisante pour empêcher un développement bactérien. Comme conservateur, on utilise par exemple du Bronopol.

## Revendications

1. Nontissé comprenant une couche (1) d'âme en fibres de bois, **caractérisé en ce que** des deux côtés de la couche (1) d'âme sont appliquées des couches (2, 3) de recouvrement constituées de filaments continus en acide polylactique ou en alcool polyvinylique.

2. Nontissé suivant la revendication 1, **caractérisé en ce que** les couches de recouvrement représentent moins de 50 % du poids du non tissé.

3. Nontissé suivant la revendication 1 ou 2, **caractérisé en ce que** les couches sont liées entre elles par enchevêtrement par jets de fluide, par calandrage, ou par calandrage, puis par jets de fluide, ou enchevêtrement par jets de fluide puis par calandrage.

4. Nontissé suivant l'une des revendications précédentes, **caractérisé en ce que** les filaments ont un titre compris entre 0,5 et 3 décitex.

5. Nontissé suivant l'une des revendications précédentes, **caractérisé en ce qu'**il est imprégné d'une solution aqueuse.

6. Nontissé suivant la revendication 5, **caractérisé en ce que** la solution aqueuse représente de 50 à 800 % du poids du nontissé sec.

7. Nontissé suivant l'une des revendications précédentes, emballé dans un emballage, **caractérisé en ce qu'**un conservateur est mis dans l'emballage.

8. L'utilisation d'un nontissé suivant l'une quelconque des revendications 1 à 7, comme produits d'hygiène biodégradable, notamment comme lingette ou papier de toilette.

## Claims

1. Nonwoven comprising a core layer (1) made of wood fibres, **characterized in that** covering layers (2, 3) comprising continuous polylactic acid or polyvinyl alcohol filaments are applied on both sides of the core layer.

2. Nonwoven according to claim 1, **characterized in that** the covering layers represent less than 50% of the weight of the nonwoven.

3. Nonwoven according to claim 2, **characterized in that** the layers are bonded together by fluid-jet entanglement, or by calendering, or by calendering followed by fluid-jet entanglement, or by fluid-jet entanglement followed by calendering.

4. Nonwoven according to claim 1, **characterized in that** the filaments have a filament count between 0.5 and 3 decitex.

5. Nonwoven according to claim 1, **characterized in that** it is impregnated with an aqueous solution.

6. Nonwoven according to claim 5, **characterized in that** the aqueous solution represents from 50 to 800% of the weight of the dry nonwoven.

7. Nonwoven according to claim 1, packaged in a packaging, **characterized in that** a preservative is placed in the packaging.

8. Thense of nonwoven according to anyone of claims 1-7 as biodegradable hygien product, in particular as wipe or dry toilet paper.

## Patentansprüche

1. Vlies mit einer Kernschicht (1) aus Holzfasern, **dadurch gekennzeichnet, dass** an beiden Seiten der Kernschicht (1) Deckschichten (2, 3) appliziert sind, die aus durchgehenden Fäden aus Polymilchsäure oder Polyvinylalkohol bestehen.

2. Vlies nach Anspruch 1, **dadurch gekennzeichnet, dass** die Deckschichten mindestens 50 Gew.-% des Vlieses ausmachen.

3. Vlies nach Anspruch 1 oder 2, **dadurch gekennzeichnet, dass** die Schichten untereinander durch Verfestigung durch Wasserstrahlen, durch Kalandrieren, oder durch Kalandrieren, dann durch Wasserstrahlen, oder durch Verfestigung durch Wasserstrahlen, dann durch Kalandrieren verbunden sind.

4. Vlies nach einem der vorhergehenden Ansprüche, **dadurch gekennzeichnet, dass** die Filamente eine Feinheitszahl zwischen 0,5 und 3 Decitex haben.

5. Vlies nach einem der vorhergehenden Ansprüche, **dadurch gekennzeichnet, dass** es mit einer wässrigen Lösung durchfeuchtet ist.

6. Vlies nach Anspruch 5, **dadurch gekennzeichnet, dass** die wässrige Lösung 50 bis 800 Gew.-% des trockenen Vlieses ausmacht.

7. Vlies nach einem der vorhergehenden Ansprüche, das in einer Verpackung verpackt ist, **dadurch gekennzeichnet, dass** in die Verpackung ein Konservierungsmittel eingebracht ist.

8. Verwendung eines Vlieses nach einem der vorhergehenden Ansprüche 1 bis 7, als biologisch abbaubare Hygieneprodukte, insbesondere als Reinigungs-/Pflege-/Kosmetiktuch oder Toilettenpapier.
